# EUROPÄISCHE PATENTANMELDUNG

(11) **EP 1 055 534 A2**
(43) Veröffentlichungstag der Anmeldung: **29.11.2000**
(21) Anmeldenummer: 00109137.0
(22) Anmeldetag: 05.05.2000
(51) Int. Cl.: B60G 7/00, B60G 3/04

(54) **Querlenker**

(30) Priorität: 22.05.1999 DE 19923698
(71) Anmelder: Volkswagen Aktiengesellschaft, 38436 Wolfsburg (DE)
(72) Erfinder: Ott, Klaus, 38176 Wendeburg (DE)

(57) **Zusammenfassung**

Ein erfindungsgemäßer Querlenker, weist einen einstückigen aus Leichtmetall gefertigten Grundkörper (4) auf, wobei eine der Lagerstellen (1,2,3) zur Aufnahme eines als sogenanntes Komfortlager wirkenden Hydrolagers ausgebildet ist. Die Lagerstelle, die zur Aufnahme des Hydrolagers vorgesehen ist, ist bevorzugt mit weiteren funktionellen Elementen versehen, wie etwa mit einem Anschlag (8), der bei starken Schlägen bzw. Stößen eine direkte Anlage eines Lagerpuffers und damit eine schnelle Dämpfung erlaubt, oder mit zumindest einer Rippe (10) an einem Lagerzapfen (12), wobei diese zumindest eine Rippe (10) eine Selbstzentrierung des Hydrolagers bei der Montage bewirkt. Der Übergang zwischen dem Lagerzapfen (12) und dem Anschlag (8) wird vorzugsweise mit einer Rundung (9) versehen, die einen Einfluß auf das Dämpfungsverhalten des Hydrolagers bei starken Belastungen ausübt. Die Fertigung des Querlenkers mittels vorzugsweise Thixocasting erlaubt die Kombination von Bereichen sehr dünnwandiger Abschnitte mit Bereichen dickerer Wandstärke. Die Lagerstellen (1,2 und 3) können bei diesem Herstellungsverfahren montierbereit ausgebildet werden, so daß eine nachträgliche Bearbeitung der Lagerstellen (1,2 und 3) entfällt. Der Grundkörper (4) ist vorzugsweise im Querschnitt in weiten Bereichen als Doppel-T-förmiges Profil ausgebildet sein, so daß eine Optimierung der Wandstärke möglich ist.

## Beschreibung

Die vorliegenden Erfindung betrifft ganz allgemein einen Querlenker für eine Vorderachse eines Kraftfahrzeugs, und insbesondere einen Querlenker gemäß dem Oberbegriff des Patentanspruchs 1.

Ein bekannter Querlenker dieser Bauart ist in der Figur 4 dargestellt. Dort ist aus dem Werkstoff Stahl ein Querlenker, der aus im wesentlichen zwei miteinander verschweißten Halbschalen (Oberschale und Unterschale) besteht, mit einer angeschweißten Gewindeplatte für die Koppelstangen-Anbindung 43 und mit einer angeschweißten Lageraufnahmebuchse für die erste Lagerstelle 41 versehen. Das Führungsgelenk (nicht dargestellt) wird über drei Schrauben an der Führungsgelenk-Anbindung 46 angeschraubt. Der so gebildete Grundkörper 44 umfaßt eine zweite Lagerstelle 42 und weist im wesentlichen einen Rechteckquerschnitt sowie Randverstärkungen 45 auf, so daß die erforderliche Stabilität sichergestellt ist.

Die Lagerstelle 42 ist hierbei mit ihrer Achse senkrecht zur Hauptebene des Grundkörpers 44 (in der Fig. 4 die Zeichenebene) orientiert dargestellt, kann jedoch auch winkelig hierzu ausgeführt sein.

Schließlich ist ein weiterer Querlenker bekannt, bei dem diese Lagerstelle bereits als Stahlschmiedezapfen (nicht dargestellt) ausgeführt ist, der an den Grundkörper 44 im Bereich der Lagerstelle 42 (auf die Figur 4 bezogen) angeschweißt ist.

Im Stand der Technik sind somit Querlenker bekannt, die infolge der Fertigung aus Stahl eine komplizierte Herstellung bedingen, wobei mehrere Bauteile miteinander verschweißt werden müssen und anschließend der Querlenker einer Korrosionsschutzbehandlung unterzogen werden muß.

Demgegenüber ist es die Aufgabe der vorliegenden Erfindung, einen Querlenker zu schaffen, der einfach zu fertigen ist, der eine hohe Festigkeit aufweist und der eine verbesserte Lagerung ermöglicht.

Diese Aufgabe wird durch einen Querlenker gelöst, der die Merkmale gemäß dem Patentanspruch 1 aufweist.

Demnach weist ein Querlenker, der insbesondere für eine Vorderachse eines Kraftfahrzeugs vorgesehen ist, einen Grundkörper auf, der im wesentlichen T-förmig ausgebildet ist und der an seinen Endabschnitten jeweils eine Lagerstelle hat, wobei der Grundkörper einstückig aus Leichtmetall gefertigt ist und wobei eine der Lagerstellen zur Aufnahme eines Hydrolagers ausgebildet ist.

Der erfindungsgemäße Querlenker ist an einer der Lagerstellen zur Aufnahme eines Hydrolagers ausgebildet, welches als sogenanntes Komfortlager wirkt, wobei das Hydrolager infolge der hydraulischen Dämpfung eine Lagerung mit hervorragenden Eigenschaften erlaubt.

Die Lagerstelle, die zur Aufnahme des Hydrolagers vorgesehen ist, ist bevorzugt mit weiteren funktionellen Elementen versehen, wie etwa mit einem Anschlag, der bei starken Schlägen bzw. Stößen eine direkte Anlage eines Lagerpuffers und damit eine schnelle Dämpfung erlaubt, oder mit zumindest einer Rippe an einem Lagerzapfen, wobei diese zumindest eine Rippe eine Selbstzentrierung des Hydrolagers bei der Montage bewirkt. Der Übergang zwischen dem Lagerzapfen und dem Anschlag wird vorzugsweise mit einer Rundung versehen, die einen Einfluß auf das Dämpfungsverhalten des Hydrolagers bei starken Belastungen ausübt.

Die Fertigung mittels eines modifizierten Druckgußverfahrens, wie beispielsweise Thixocasting, erlaubt die Kombination von Bereichen sehr dünnwandiger Abschnitte (etwa 2 mm stark) mit Bereichen dickerer Wandstärke (bis zu etwa 50 mm) am Querlenker. Die Lagerstellen können bei diesem Herstellungsverfahren montierbereit ausgebildet werden, so daß eine nachträgliche Bearbeitung der Lagerstellen entfallen kann.

Der Grundkörper ist vorzugsweise im Querschnitt in weiten Bereichen als Doppel-T-förmiges Profil ausgebildet sein, so daß eine Optimierung der Wandstärke möglich ist. Vorteilhafte Weiterbildungen eines solchen Querlenkers sind in den Unteransprüchen angeführt.

Der erfindungsgemäße Querlenker wird im folgenden unter Bezugnahme auf die Zeichnungen anhand von bevorzugten Ausführungsformen näher erläutert werden.

In den Zeichnungen zeigt:

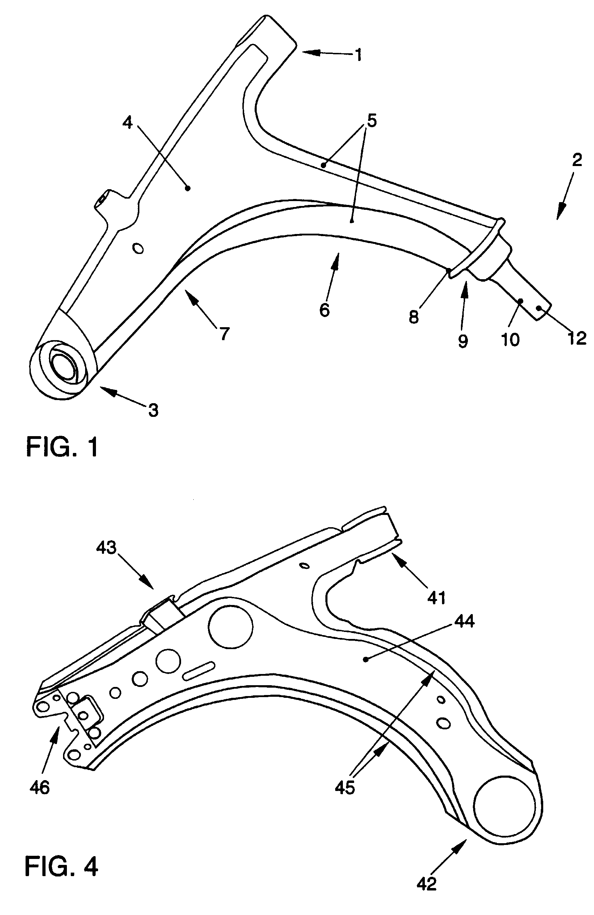

Fig. 1 eine perspektivische Ansicht eines Querlenkers nach einer ersten Ausführungsform gemäß der vorliegenden Erfindung;
Fig. 2 eine vergrößerte perspektivische Teilansicht einer Lagerstelle des Querlenkers nach der Figur 1;
Fig. 3 eine perspektivische Ansicht eines Querlenkers nach einer zweiten Ausführungsform gemäß der vorliegenden Erfindung; und
Fig. 4 eine perspektivische Ansicht eines bekannten Querlenkers aus Stahl.

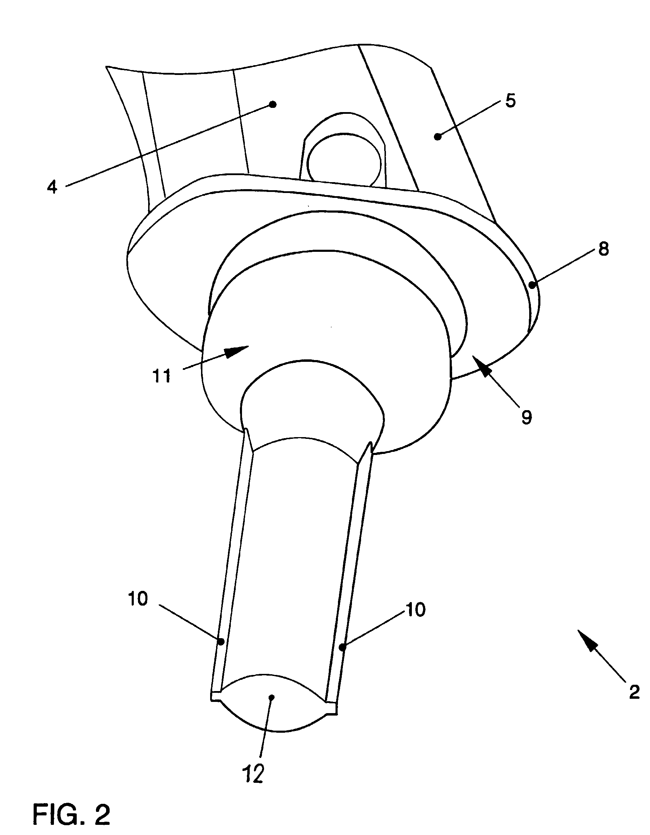

In der Figur 2 ist eine erste Ausführungsform des Querlenkers nach der vorliegenden Erfindung dargestellt. Dieser Querlenker findet vorzugsweise seinen Einsatz an der Vorderachse eines Kraftfahrzeugs, wobei diese mit einem radführenden Federbein nach dem McPherson-Prinzip aufgebaut ist.

Der Querlenker ist von der Grundform her T-förmig ausgebildet, wobei ein Querabschnitt 7 an seinen beiden Endabschnitten jeweils eine erste Lagerstelle 1 und eine dritte Lagerstelle, d.h. ein Führungsgelenk 3 aufweist. Der Längsabschnitt 6, der mit seinem einen Endabschnitt am Querabschnitt abzweigt, trägt am anderen Endabschnitt eine zweite Lagerstelle 2.

Der Querschnitt des Grundkörpers 4 des Querlenkers ist als Doppel-T-Profil ausgebildet, wobei der Bereich am umlaufenden Rand des Querträgers als Randverstärkung 5 ausgebildet ist, die sich vorzugsweise über die gesamte Länge zwischen den Lagerstellen 1 und 2 und dem Führungsgelenk 3 erstreckt. In den weniger belasteten Innenbereichen des Querlenkers ist die Wandstärke gegenüber der Randverstärkung 5 reduziert.

Als Werkstoff für den Grundkörper 4 wird vorzugsweise Aluminium oder Magnesium oder eine entsprechende Legierung verwendet, so daß eine außerordentlich leichte Konstruktion möglich ist, verglichen mit dem Stahl-Querlenker nach dem Stand der Technik.

Der Grundkörper 4 des erfindungsgemäßen Querlenkers ist einstückig ausgeführt, so daß Herstellungsschritte zum Verbinden mehrerer Bauteile wegfallen. Infolge der Verwendung von Leichtmetall für den Grundkörper 4 des Querlenkers kann zudem auf eine Behandlung zum Korrosionsschutz (zum Beispiel Lackieren) verzichtet werden.

Die Bauteilwandstärke des erfindungsgemäßen Querlenkers kann nach vorheriger Berechnung optimiert werden und vorzugsweise mittels des Thixocasting-Verfahrens (oder einem anderen modifizierten Druckgußverfahren) am Grundkörper 4 so ausgebildet werden, daß an Stellen, die einer hohen Belastung ausgesetzt sind, entsprechende Festigkeiten erreicht werden, während an Stellen, die einer nur geringen Belastung ausgesetzt sind, Material eingespart werden kann. Die Wandstärke am Bauteil ist damit nicht konstant, sondern den Anforderungen anpaßbar.

Schließlich lassen sich die Lagerstellen 1 bis 3 montierbereit herstellen, so daß sich die entsprechenden Lager (nicht dargestellt) direkt, d.h. ohne eine weitere mechanische Bearbeitung der Lagerstellen montieren lassen.

Die Integration des Führungsgelenks 3 in den erfindungsgemäßen Querlenker ist gegenüber dem Stand der Technik ein deutlicher Fortschritt, da eine Vielzahl von Bauteilen und Bearbeitungsschritten eingespart wird.

Ein Anschlag 8, der eine weitere Funktion der Lagerstelle 2 ermöglicht, nämlich die Anschlagsfunktion eines Lagers (nicht dargestellt) an der Lagerstelle 2, ist in den Querlenker integriert.

Vorzugsweise wird an der Lagerstelle 2 ein Hydrolager montiert. Es kann aber auch ein Gummi-Metall-Lager dort vorgesehen werden.

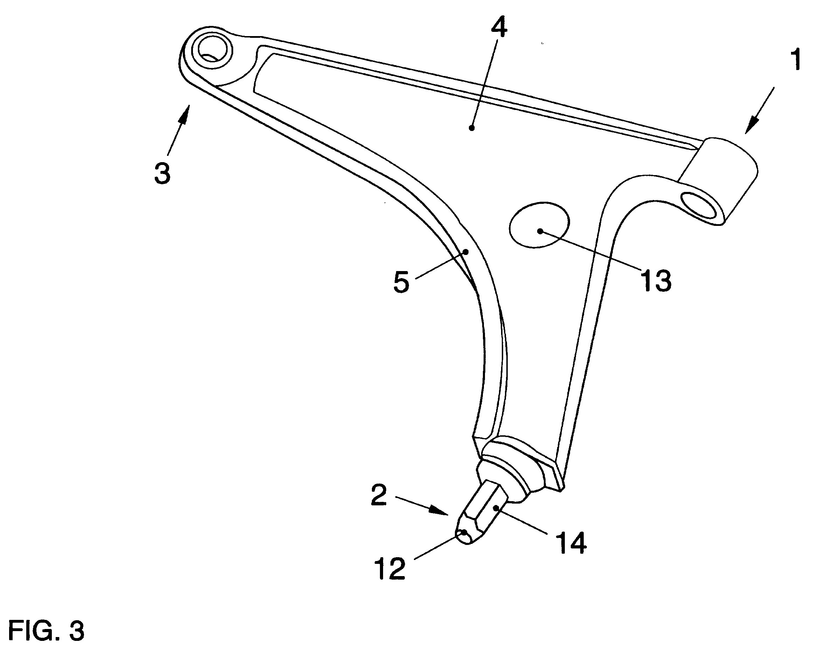

Mit Bezug zu den Figuren 2 und 3 wird die Lagerstelle 2 näher erläutert. Ein profilierter (in der Fig. 2 ein zylinderförmiger und in der Fig. 3 ein sechseckiger) Lagerzapfen 12 erstreckt sich von dem Anschlag 8 aus. In der in der Fig. 2 gezeigten Ausführungsform ist die Zapfenkontur kreisrund ausgeführt, wobei an zwei diametral gegenüberliegenden Seiten des Lagerzapfens 12 zwei Rippen 10 vorgesehen sind, die sich in axialer Richtung des Lagerzapfens 12 erstrecken. Die Rippen 10 weisen einen rechteckigen Querschnitt auf.

Zwischen dem nicht freien Ende des Lagerzapfens 12 und dem Anschlag 8 befindet sich ein Übergang, der mit einer Rundung 9 versehen ist. Diese Rundung 9 bildet eine Auflagefläche für das Hydrolager. Bei einer starken Beanspruchung des Hydrolagers, d.h. wenn das Hydrolager in axialer Richtung des Lagerzapfens 12 belastet wird, kann das Hydrolager mit dem Anschlag 8 in Anlage gelangen.

Der Anschlag 8 bewirkt also bei starken Stößen bzw. Schlägen eine direkte Anlage zwischen Anschlag 8 und dem Hydrolagerpuffer, so daß es hierdurch zu einer schnellen Dämpfung kommt. Ein Verdrehen und damit eine Beschädigung des Hydrolagers ist somit ausgeschlossen.

Die Rundung 9 bewirkt infolge der besonderen Gestaltung ein kontinuierlich zunehmendes Dämpfungsverhalten des Hydrolagers bei hohen Belastungen (z.B. starkes Beschleunigen oder Bremsen).

Die Auflage (-fläche) 11 an dem Anschlag 8 ist exzentrisch zum Lagerzapfen 12 ausgeführt und bewirkt ein unterschiedliches Dämpfungsverhalten in unterschiedlichen Richtungen, d.h. daß bei einem normalen Beschleunigen keine Dämpfung vorgesehen werden kann, während beim Bremsen sofort ein hydraulisches Dämpfen einsetzt.

Die seitlich angebrachten Rippen 10 am Lagerzapfen 12 bewirken bei der Montage des Hydrolagers eine Selbstzentrierung.

Anstelle des Hydrolagers kann auch aus Kostengründen ein preiswertes Gummi-Metall-Lager eingesetzt werden.

In der Fig. 3 ist eine zweite Ausführungsform nach der vorliegenden Erfindung dargestellt. Der dort gezeigte Querlenker ist zum Querlenker nach der ersten Ausführungsform ähnlich, wobei die wesentlichen Abweichungen in der Durchführung 13 für eine Verschraubung und in dem sechseckigen Lagerzapfen 12 zu sehen sind, der mit einem Sechskant 14 ausgeführt ist. Der Sechskant 14 erleichtert die relative Positionierung zu einem Hydrolager, welches von dem Lagerzapfen 12 aufgenommen wird.

Zusammenfassend können die Vorteile des erfindungsgemäßen Querlenkers gegenüber den bekannten Konstruktionen aus Stahlblech oder aus einem ALU-Schmiedeteil wie folgt angeführt werden:
- Die Möglichkeit der Kombination von dünnwandigen Bereichen (2 mm) mit dickwandigen Bereichen (50 mm) am Querlenker
- Die endkonturnahe Gestaltung des Querlenkers, d.h. es müssen nur sehr wenige Bereiche nachbearbeitet werden
- Die Lager an den Lagerstellen 1, 2 und 3 können direkt, d.h. ohne eine Nachbearbeitung montiert werden
- Das Führungsgelenk 3 kann in den Querlenker integriert werden; die Innenflächen des Führungsgelenks müssen nicht mehr bearbeitet werden
- Es lassen sich beim Thixocasting extreme Querschnittsübergänge (von dick auf dünn und umgekehrt) schaffen
- Die Ausformschrägen können teilweise bis auf 1° reduziert werden (zum Vergleich: beim Schmiedeteil mindestens 5°)
- Es lassen sich sehr kleine Übergangsradien (R = 0,5 mm) erzeugen
- Die gesamte Fertigung des Querlenkers ist damit kostengünstig
- Der erfindungsgemäße Querlenker ist sehr leicht, verglichen mit einem Querlenker nach dem Stand der Technik
- Die Festigkeitseigenschaften sind so hoch wie bei einem Schmiedeteil, jedoch homogen über das Bauteil verteilt
- Es lassen sich weitere Funktionen (z.B. Anschlag 8 der Lagerstelle 2) in den Querlenker integrieren
- Es gibt keinen Trenngrat mehr, insbesondere an der Lagerstelle 2

Der erfindungsgemäße Querlenker ist insbesondere für eine Vorderachse eines Kraftfahrzeugs vorgesehen und weist einen Grundkörper 4 auf, der im wesentlichen T-förmig ausgebildet ist und der an seinen Endabschnitten jeweils eine Lagerstelle 1, 2 und 3 hat, wobei der Grundkörper 4 einstückig aus Leichtmetall gefertigt ist. Dieser Querlenker zeichnet sich durch eine besonders leichte Konstruktion aus, die auf die einstückige Fertigung aus Leichtmetall zurückzuführen ist. Infolge des Einsatzes des Leichtmetalls fällt bei der Herstellung auch die nachträgliche Behandlung mit einem Korrosionsschutz weg. Der Grundkörper 4 kann im Querschnitt in weiten Bereichen als Doppel-T-förmiges Profil ausgebildet sein, so daß eine Optimierung der Wandstärke möglich ist. Mittels Thixocasting hergestellt, läßt sich die Fertigung vereinfachen und damit die Kosten senken, obwohl die Festigkeit ähnlich hoch wie bei einem Schmiedeteil ist. Die Lagerstelle 2 ist zur Aufnahme eines Hydrolagers vorgesehen um die Lagerungseigenschaften zu verbessern.

Hinsichtlich weiterer Merkmale und Vorteile des erfindungsgemäßen Querlenkers wird ausdrücklich auf die zugehörigen Patentansprüche und die Zeichnungen verwiesen.

### BEZUGSZEICHENLISTE

- 1: Erste Lagerstelle
- 2: Zweite Lagerstelle
- 3: Führungsgelenk (dritte Lagerstelle)
- 4: Grundkörper
- 5: Randverstärkung
- 6: Längsabschnitt
- 7: Querabschnitt
- 8: Anschlag
- 9: Rundung
- 10: Rippe(n)
- 11: Auflage
- 12: Zapfen
- 13: Durchführung
- 14: Sechskant
- 41: Erste Lagerstelle
- 42: Zweite Lagerstelle
- 43: Koppelstangen-Anbindung
- 44: Grundkörper
- 45: Randverstärkung
- 46: Führungsgelenk-Anbindung

## Patentansprüche

1. Querlenker, insbesondere für eine Vorderachse eines Kraftfahrzeugs, mit einem Grundkörper (4), der im wesentlichen T-förmig ausgebildet ist und der an seinen Endabschnitten jeweils eine Lagerstelle (1, 2, 3) aufweist, **dadurch gekennzeichnet**, daß der Grundkörper (4) einstückig aus Leichtmetall gefertigt ist und daß eine der Lagerstellen zur Aufnahme eines Hydrolagers ausgebildet ist.

2. Querlenker nach Anspruch 1, dadurch gekennzeichnet, daß das Leichtmetall Aluminium oder Magnesium ist.

3. Querlenker nach Anspruch 1 oder 2, dadurch gekennzeichnet, daß der Grundkörper (4) mittels Thixocasting hergestellt ist.

4. Querlenker nach einem der Ansprüche 1 bis 3, dadurch gekennzeichnet, daß das Querschnittsprofil des Grundkörpers (4) im wesentlichen Doppel-T-förmig ist.

5. Querlenker nach einem der Ansprüche 1 bis 4, dadurch gekennzeichnet, daß die Lagerstelle (3) als Führungsgelenk ausgebildet ist.

6. Querlenker nach einem der Ansprüche 3 bis 5, dadurch gekennzeichnet, daß zumindest eine weitere der beiden Lagerstellen (1, 2) nach dem Thixocasting montierbereit ausgebildet ist.

7. Querlenker nach einem der Ansprüche 1 bis 6, dadurch gekennzeichnet, daß die Lagerstelle (2) mit einem Anschlag (8) ausgebildet ist.

8. Querlenker nach einem der Ansprüche 1 bis 7, dadurch gekennzeichnet, daß die Lagerstelle (2) mit einem Lagerzapfen (12) versehen ist.

9. Querlenker nach Anspruch 8, dadurch gekennzeichnet, daß am Lagerzapfen (12) zwei seitliche, in Axialrichtung des Lagerzapfens (12) verlaufende, Rippen (10) vorgesehen sind.

10. Querlenker nach einem der Ansprüche 7 bis 9, dadurch gekennzeichnet, daß zwischen dem Anschlag (8) und dem Lagerzapfen (12) ein Übergang mit einer Rundung (9) vorgesehen ist.

11. Querlenker nach einem der Ansprüche 1 bis 10, dadurch gekennzeichnet, daß das Führungsgelenk (3) in den Grundkörper (4) integriert ist.

12. Querlenker nach einem der Ansprüche 1 bis 11, dadurch gekennzeichnet, daß der Grundkörper (4) einen dünnwandigen Mittenabschnitt und eine demgegenüber verdickte Randverstärkung (5) aufweist.

13. Querlenker nach Anspruch 12, dadurch gekennzeichnet, daß die Randverstärkung (5) nahezu vollständig am umlaufenden Rand des Querlenkers ausgebildet ist.

14. Querlenker nach einem der Ansprüche 1 bis 13, dadurch gekennzeichnet, daß der Lagerzapfen (2) zur Aufnahme des Hydrolagers vorgesehen ist.
